# EUROPEAN PATENT SPECIFICATION

(11) **EP 3 211 687 B1**
(45) Date of publication and mention of the grant of the patent: **02.04.2025**
(21) Application number: 17000236.4
(22) Date of filing: 14.02.2017
(51) Int. Cl.: H01M 10/04, B32B 27/20, B32B 7/12, H01M 10/058, H01M 10/052

(54) **INSULATING TAPE**
ISOLIERBAND
BANDE ISOLANTE

(30) Priority: 24.02.2016 JP 2016033247; 02.02.2017 JP 2017017383
(43) Date of publication of application: 30.08.2017
(73) Proprietor: Nitto Denko Corporation, Ibaraki-shi, Osaka 567-8680 (JP)
(72) Inventor: Kawabe, Shigeki, Ibaraki-shi, Osaka, 567-8680 (JP)
(74) Representative: Müller-Boré & Partner Patentanwälte PartG mbB

(56) References cited:
- EP-A1- 1 386 941
- EP-A1- 2 481 784
- EP-A1- 2 784 140
- EP-A1- 2 801 597
- WO-A1-2006/120804
- WO-A1-2016/194093
- JP-A- S60 135 560
- US-A1- 2013 302 602

## Description

The present invention relates to an insulating tape.

A secondary battery generally includes a structural body (e.g., a winding body or a laminate) obtained by laminating a positive electrode and a negative electrode through a separator, and an insulating tape has been used in the structural body for the purposes of, for example, strengthening its insulating property and simplifying its production process. The insulating tape to be used as described above may be exposed to high temperature, for example, in a battery production process (e.g., a heat-drying step before the injection of an electrolytic solution) or at the time of the charge and discharge of the battery, and involves a problem in that the tape shrinks at the time of the exposure and hence its insulating property is impaired. In addition, when a minute internal short circuit occurs in the secondary battery, an abrupt temperature increase may occur in a short-circuited site, and in a conventional insulating tape, a reduction in insulating property resulting from the temperature increase also becomes a problem.

Meanwhile, a pressure-sensitive adhesive tape having added thereto an inorganic filler is known to be used as a pressure-sensitive adhesive tape to be used in the secondary battery. However, the addition of the inorganic filler is intended for, for example, a reinforcing effect, the impartment of a heat-radiating property, and the impartment of flame retardancy, and hence a pressure-sensitive adhesive tape (insulating tape) excellent in stability in a nonaqueous secondary battery has not been obtained. EP 2 481 784 A1 discloses a laminate for a nonaqueous battery. US 2013/0302602 A1 discloses an adhesive sheet. EP 1 386 941 A1 discloses a pressure-sensitive adhesive tape or sheet. EP 2 784 140 A1 discloses a pressure-sensitive adhesive tape for electro chemical device. EP 2 801 597 A1 discloses an adhesive tape for preventing aquatic biofouling. JP S60 135560 A discloses a masking tape or sheet for galvanizing. WO 2006/120804 A1 discloses an adhesive protective member.

The present invention has been made to solve the conventional problems, and an object of the present invention is to provide an insulating tape to be used in a nonaqueous secondary battery, the insulating tape being capable of maintaining its insulating property even under a severe environment, e.g., even when being heated, and being capable of improving the safety of the nonaqueous secondary battery.

According to one embodiment of the present invention, there is provided an insulating tape for a nonaqueous battery as defined in the appended claim 1.

According to another embodiment of the present invention, there is provided an insulating tape for a nonaqueous battery as defined in the appended claim 2.

In one embodiment, the insulating inorganic filler has a layer having a surface treated with one of a higher fatty acid, an anionic surfactant, a phosphoric acid ester, a silane coupling agent, a titanate coupling agent, and a fatty acid ester of a polyhydric alcohol.

In one embodiment, the pressure-sensitive adhesive layer contains one of a butyl rubber, a polyisobutylene rubber, a styrene-ethylene-butylene-styrene block rubber (SEBS), a styrene-butadiene-styrene block rubber (SBS), and a styrene-isoprene-styrene block rubber (SIS).

In one embodiment, the pressure-sensitive adhesive layer contains an olefin-based polymer.

In one embodiment, the insulating layer contains one of a polyacrylate-based resin, a polyurethane-based resin, a polyimide-based resin, an aramid-based resin, a polyamide-based resin, an EVOH-based resin, a polyacrylonitrile-based resin, a polyvinyl ether-based resin, a polyvinyl alcohol-based resin, a polyethyleneimine-based resin, a polyamide imide-based resin, a polyether imide-based resin, and a polyvinylidene fluoride-based resin.

In one embodiment, the insulating layer contains one of a butadiene rubber, a styrene-butadiene rubber (SBR), an ethylene-propylene-diene rubber (EPDM), a styrene-butadiene-styrene block rubber (SBS), a styrene-isoprene-styrene block rubber (SIS), a styrene-ethylene-butylene-styrene block rubber (SEBS), a styrene-ethylene-propylene-styrene block rubber (SEPS), a butyl rubber, and a polyisobutylene rubber.

In one embodiment, when the insulating tape for a nonaqueous battery is immersed in the following nonaqueous electrolytic solution A containing a predetermined electrolyte and a predetermined solvent, and is left to stand for 72 hours, an amount of a gas produced from the nonaqueous electrolytic solution A is 0.3 cc/mg or less per 1 mg of the insulating inorganic filler:

### <nonaqueous electrolytic solution A>

electrolyte: 1.4 M LiPF₆
solvent: a mixed solvent of ethylene carbonate and diethyl carbonate; ethylene carbonate:diethyl carbonate (volume ratio)=1:2
liquid temperature: 85°C.

According to another embodiment of the present invention, there is provided a nonaqueous battery. The nonaqueous battery includes the insulating tape.

The insulating tape of the present invention is the insulating tape to be used in a nonaqueous secondary battery, the insulating tape being capable of maintaining its insulating property even under a severe environment, e.g., even when being heated, and being capable of improving the safety of the nonaqueous secondary battery.
FIG. **1** is a schematic sectional view of an insulating tape according to one embodiment of the present invention.
FIG. **2A,** FIG. **2B,** and FIG. **2C** are each a schematic sectional view of an insulating tape according to another embodiment of the present invention.

### A. Entire Construction of Insulating Tape

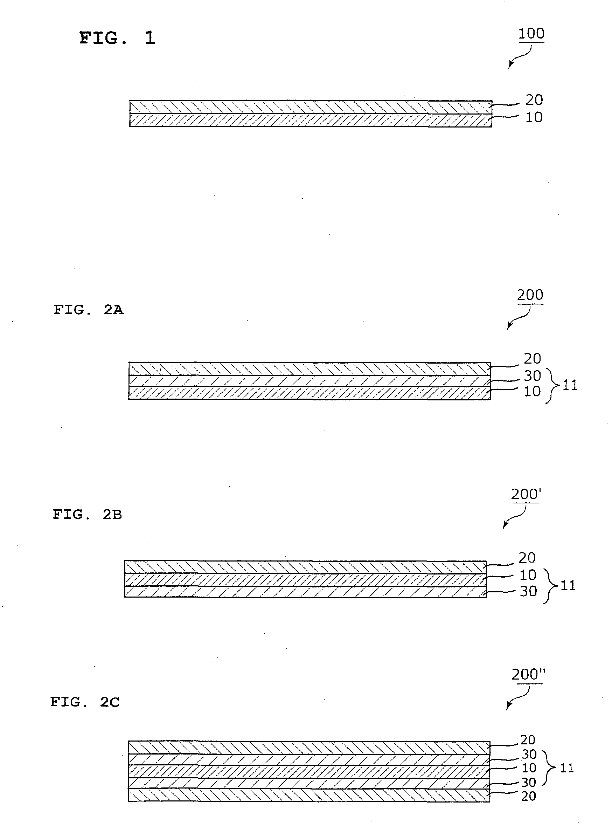

FIG. **1** is a schematic sectional view of an insulating tape according to one embodiment of the present invention. An insulating tape **100** illustrated in FIG. **1** includes a base material **10,** and a pressure-sensitive adhesive layer **20** arranged on one side, or each of both sides, of the base material **10** (one side in the illustrated example). In this embodiment, the pressure-sensitive adhesive layer **20** contains an insulating inorganic filler (not shown) . A release liner may be arranged outside the pressure-sensitive adhesive layer of the insulating tape of the present invention for the purpose of protecting the pressure-sensitive adhesive surface of the tape until the tape is put into use, though the liner is not shown.

FIG. **2A** is a schematic sectional view of an insulating tape according to another embodiment of the present invention. An insulating tape **200** illustrated in FIG. **2A** includes the base material **10** having formed thereon an insulating layer **30** (a base material **11** with an insulating layer), and the pressure-sensitive adhesive layer **20** arranged on one side of the base material **11** with the insulating layer. In the insulating tape **200,** the pressure-sensitive adhesive layer **20,** the insulating layer **30,** and the base material **10** are arranged in the stated order. The insulating layer **30** contains an insulating inorganic filler (not shown). In the insulating tape including the insulating layer, the base material and/or the pressure-sensitive adhesive layer may contain the insulating inorganic filler, or may be free of the filler.

FIG. **2B** is a schematic sectional view of an insulating tape according to still another embodiment of the present invention. An insulating tape **200'** illustrated in FIG. **2B** includes the base material **10** having formed thereon the insulating layer **30** (the base material **11** with the insulating layer), and the pressure-sensitive adhesive layer **20** arranged on one side of the base material **11** with the insulating layer. In the insulating tape **200',** the pressure-sensitive adhesive layer **20,** the base material **10,** and the insulating layer **30** are arranged in the stated order.

FIG. **2C** is a schematic sectional view of an insulating tape according to still further another embodiment of the present invention. An insulating tape **200"** illustrated in FIG. **2C** includes the base material **10** having formed thereon the insulating layer **30** (the base material **11** with the insulating layer), and the pressure-sensitive adhesive layer **20** arranged on each of both sides of the base material **11** with the insulating layer. In the insulating tape **200",** the insulating layer **30** is arranged between the pressure-sensitive adhesive layer **20** and the base material **10.**

The insulating tape of the present invention is an insulating tape for a nonaqueous battery. The insulating tape of the present invention may be used for, for example, bonding a member and another member (e.g., an electrode and a separator) to each other in a nonaqueous electrolytic solution for a nonaqueous battery. The insulating tape of the present invention hardly shrinks and softens not only under normal temperature but also under a high temperature (of, for example, 400°C or more) by virtue of the incorporation of the insulating inorganic filler into the base material and/or the pressure-sensitive adhesive layer, or the presence of the insulating layer containing the insulating inorganic filler, and hence the tape can express a sufficient insulating property and a sufficient adhesive property. Further, the tape can prevent the deterioration of the nonaqueous electrolytic solution. Therefore, the use of the insulating tape of the present invention in a nonaqueous battery can improve the safety and durability of the nonaqueous battery.

When the insulating tape of the present invention is immersed in the following nonaqueous electrolytic solution A containing a predetermined electrolyte and a predetermined solvent, and is left to stand for 72 hours, the amount of a gas produced from the nonaqueous electrolytic solution A is preferably 0.3 cc/mg or less, more preferably 0.2 cc/mg or less, still more preferably 0.1 cc/mg or less per 1 mg of the insulating inorganic filler. The gas produced here is caused by the deterioration of the nonaqueous electrolytic solution. In the present invention, the production of an unnecessary gas can be prevented by preventing the deterioration of the nonaqueous electrolytic solution.

### <Nonaqueous Electrolytic Solution A>

Electrolyte: 1.4 M LiPF₆
Solvent: mixed solvent of ethylene carbonate and diethyl carbonate; ethylene carbonate:diethyl carbonate (volume ratio)=1:2
Liquid temperature: 85°C

The pressure-sensitive adhesive strength of the insulating tape of the present invention with SUS304BA under an environment at 25°C is preferably from 0.1 N/10 mm to 10.0 N/10 mm, more preferably from 0.2 N/10 mm to 5.0 N/10 mm. The term "pressure-sensitive adhesive strength" as used herein refers to a pressure-sensitive adhesive strength measured by a method in conformity with JIS Z 0237:2000 (bonding condition: one reciprocation of a 2-kilogram roller, peel rate: 300 mm/min, peel angle: 180°).

### B. Insulating Inorganic Filler

In the present invention, at least one kind selected from the group consisting of magnesium hydroxide, magnesium carbonate, magnesium oxide, alumina, boron nitride, and titanium oxide is used as the insulating inorganic filler. Each of those compounds is particularly poor in reactivity with a nonaqueous electrolytic solution, and hence the use of the inorganic compound as the insulating inorganic filler can provide an insulating tape that can significantly prevent the deterioration of the nonaqueous electrolytic solution.

In one embodiment, a compound having an isoelectric point of more than 7 (preferably 9 or more) is used as the insulating inorganic filler. The use of such compound as the insulating inorganic filler can provide an insulating tape that can significantly prevent the deterioration of a nonaqueous electrolytic solution.

In one embodiment, the insulating inorganic filler is subjected to a surface treatment. The surface treatment is, for example, a surface treatment with a higher fatty acid, an anionic surfactant, a phosphoric acid ester, a silane coupling agent, a titanate coupling agent, or a fatty acid ester of a polyhydric alcohol. The insulating inorganic filler subjected to such surface treatment has a surface-treated layer. The performance of the surface treatment can improve the dispersibility of the insulating inorganic filler, and hence can improve adhesiveness between a layer containing the insulating inorganic filler (the base material, the pressure-sensitive adhesive layer, or the insulating layer) and any other layer. Any appropriate method may be adopted as a method for the surface treatment. For example, stearic acid or palmitic acid may be used as the higher fatty acid. A fatty acid ester containing, for example, glycerin, ethylene glycol, propylene glycol, or pentaerythritol may be used as the fatty acid ester of the polyhydric alcohol.

The average particle diameter of the insulating inorganic filler is preferably from 0.1 µm to 10 µm, more preferably from 0.1 µm to 8 µm, still more preferably from 0.1 µm to 5 µm. The use of an insulating inorganic filler having an average particle diameter within such range can provide an insulating tape that has an excellent insulating property and is excellent in heat resistance. The term "average particle diameter" as used herein refers to a 50% average particle diameter (number basis, including primary particle diameter and particle diameter of an aggregate thereof) based on a laser scattering method.

The BET specific surface area of the insulating inorganic filler is preferably 200 m²/g or less, more preferably 160 m²/g or less, still more preferably 100 m²/g or less, particularly preferably 50 m²/g or less, most preferably 10 m²/g or less. The use of an insulating inorganic filler having a BET specific surface area within such range can provide an insulating tape that has an excellent insulating property and is excellent in heat resistance. Further, the BET specific surface area of the insulating inorganic filler is preferably as small as possible because its reactivity with an electrolytic solution becomes poorer.

### C. Base Material

Any appropriate material may be used as a material constituting the base material. Examples of the base material include: fiber-based base materials, such as a woven fabric and a nonwoven fabric; paper-based base materials; and plastic-based base materials, such as a resin film. Of those, a plastic-based base material is preferably used because the base material hardly dissolves in an electrolytic solution and hardly causes the deterioration of the electrolytic solution, and a plastic-based base material formed from polyimide, polyamide, polyamide imide, polyphenylene sulfide, or polyolefin (e.g., polypropylene) is particularly preferably used. In addition, a plastic-based base material formed from polypropylene is preferably used because of its low cost. The base material may be a base material including a plurality of layers. When the base material has a multilayer form, the respective layers may be the same base material, or may be a combination of different base materials.

The thickness of the base material is preferably from 2 µm to 50 µm, more preferably from 10 µm to 40 µm. When the thickness falls within such range, an insulating tape having such a thickness as to be suitable for use in a nonaqueous battery can be obtained. In addition, when the insulating inorganic filler is incorporated into the base material to impart an insulating property thereto, an excellent insulating property can be obtained by setting the thickness of the base material within the range.

When the base material contains the insulating inorganic filler, the content of the insulating inorganic filler in the base material is preferably from 50 parts by weight to 500 parts by weight, more preferably from 100 parts by weight to 300 parts by weight with respect to 100 parts by weight of the base material. When the content falls within such range, an insulating tape that is excellent in insulating property and is excellent in adhesiveness with a layer adjacent to the base material (the pressure-sensitive adhesive layer or the insulating layer) can be obtained.

### D. Pressure-sensitive Adhesive Layer

The pressure-sensitive adhesive layer contains any appropriate base polymer, provided that the pressure-sensitive adhesive layer contains an acrylic polymer having, on a side chain thereof, an alkyl group having 4 or more carbon atoms. Examples of the base polymer to be incorporated into the pressure-sensitive adhesive layer include an acrylic polymer, a rubber-based polymer, an olefin-based polymer, and a silicone-based polymer.

An acrylic polymer (homopolymer or copolymer) using as a monomer component one kind or two or more kinds of (meth)acrylic acid alkyl esters is preferably used as the acrylic polymer. Examples of the (meth)acrylic acid alkyl ester include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth) acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth) acrylate.

In the present invention, the acrylic polymer has, on a side chain thereof, an alkyl group having 4 or more carbon atoms, preferably has an alkyl group having 6 or more carbon atoms, and more preferably has an alkyl group having 8 to 20 carbon atoms. The content of a constituent unit having, on a side chain thereof, an alkyl group having 4 or more carbon atoms in the polymer is preferably 50 wt% or more, more preferably 70 wt% or more, still more preferably from 75 wt% to 100 wt% with respect to all the constituent units constituting the polymer. The use of such acrylic polymer enables the formation of a pressure-sensitive adhesive layer poor in affinity for an electrolytic solution and excellent in durability in the electrolytic solution. In addition, the use can provide an insulating tape that hardly causes the deterioration of a nonaqueous electrolytic solution.

The acrylic polymer may contain a constituent unit derived from any other monomer component copolymerizable with the (meth)acrylic acid alkyl ester as required for the purpose of modification of cohesive strength, heat resistance, cross-likability, or the like. Examples of such monomer component include: carboxyl group-containing monomers, such as acrylic acid, methacrylic acid, carboxyethyl acrylate, carboxypentyl acrylate, itaconic acid, maleic acid, fumaric acid, and crotonic acid; acid anhydride monomers, such as maleic anhydride and itaconic anhydride; hydroxyl group-containing monomers, such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; sulfonic acid group-containing monomers, such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; (N-substituted) amide-based monomers, such as (meth)acrylamide, N,N-dimethyl(meth)acrylamide, N-butyl(meth)acrylamide, N-methylol(meth)acrylamide, and N-methylolpropane(meth)acrylamide; aminoalkyl (meth) acrylate-based monomers, such as aminoethyl (meth)acrylate, N,N-dimethylaminoethyl (meth)acrylate, and t-butylaminoethyl (meth)acrylate; alkoxyalkyl (meth)acrylate-based monomers, such as methoxyethyl (meth)acrylate and ethoxyethyl (meth)acrylate; maleimide-based monomers, such as N-cyclohexylmaleimide, N-isopropylmaleimide, N-laurylmaleimide, and N-phenylmaleimide; itaconimide-based monomers, such as N-methylitaconimide, N-ethylitaconimide, N-butylitaconimide, N-octylitaconimide, N-2-ethylhexylitaconimide, N-cyclohexylitaconimide, and N-laurylitaconimide; succinimide-based monomers, such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers, such as acrylonitrile and methacrylonitrile; epoxy group-containing acrylic monomers, such as glycidyl (meth)acrylate; glycol-based acrylic ester monomers, such as polyethylene glycol (meth)acrylate, polypropylene glycol (meth)acrylate, methoxyethylene glycol (meth)acrylate, and methoxypolypropylene glycol (meth)acrylate; acrylic acid ester-based monomers each having a heterocyclic ring, a halogen atom, a silicon atom, or the like, such as tetrahydrofurfuryl (meth)acrylate, fluorine (meth)acrylate, and silicone (meth)acrylate; polyfunctional monomers, such as hexanediol di(meth)acrylate, (poly)ethylene glycol di(meth) acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate; olefin-based monomers, such as isoprene, butadiene, and isobutylene; and vinyl ether-based monomers, such as vinyl ether. One kind of those monomer components may be used alone, or two or more kinds thereof may be used in combination.

The content of the constituent unit derived from the other monomer component is preferably less than 20 wt%, more preferably 15 wt% or less with respect to all the constituent units constituting the acrylic polymer.

The weight-average molecular weight of the acrylic polymer is preferably from 50,000 to 5,000,000, more preferably from 100, 000 to 2,000,000, still more preferably from 200,000 to 1,500,000. When the weight-average molecular weight falls within such range, an insulating tape having the following characteristics can be obtained: the pressure-sensitive adhesive component of the tape is hardly eluted in an electrolytic solution, and the tape is excellent in pressure-sensitive adhesive property. The weight-average molecular weight can be obtained by using, for example, gel permeation chromatography in terms of standard polystyrene.

Examples of the rubber-based polymer include: a natural rubber; and synthetic rubbers, such as a butyl rubber, a polyisobutylene rubber, a polyisoprene rubber, a styrene-butadiene (SB) rubber, a styrene-isoprene (SI) rubber, a styrene-isoprene-styrene block rubber (SIS), a styrene-butadiene-styrene block rubber (SBS), a styrene-ethylene-butylene-styrene block rubber (SEBS), a styrene-ethylene-propylene-styrene block rubber (SEPS), a styrene-ethylene-propylene block rubber (SEP), a reclaimed rubber, a butyl rubber, polyisobutylene, and modified products thereof. Of those, a butyl rubber and a polyisobutylene rubber are preferred. The use of any such rubber-based polymer enables the formation of a pressure-sensitive adhesive layer poor in affinity for an electrolytic solution and excellent in durability. In addition, the use can provide an insulating tape that hardly causes the deterioration of a nonaqueous electrolytic solution.

Any appropriate polymer is used as the olefin-based polymer as long as the effects of the present invention are obtained. The use of the olefin-based polymer enables the formation of a pressure-sensitive adhesive layer poor in affinity for an electrolytic solution and excellent in durability. In addition, the use can provide an insulating tape that hardly causes the deterioration of a nonaqueous electrolytic solution. The olefin-based polymer is specifically, for example, a homopolymer or a copolymer having a constituent unit derived from an α-olefin having 2 to 10 carbon atoms, such as ethylene, propylene, 1-butene, 1-hexene, 3-methyl-1-butene, 4-methyl-1-pentene, 1-heptene, 1-octene, or 1-decene. Of those, for example, an ethylene-based polymer, such as high-density polyethylene, low-density polyethylene, or an ethylene-vinyl acetate copolymer (EVA), or a propylene-based polymer, such as polypropylene, is preferably used as the olefin-based polymer. Any such polymer is advantageous in terms of cost, and is advantageous because the polymer enables the formation of a pressure-sensitive adhesive layer excellent in low-temperature pressure-sensitive adhesive property.

In one embodiment, acid-modified polyolefin is used. The use of the acid-modified polyolefin can provide an insulating tape showing an excellent pressure-sensitive adhesive property even in an electrolytic solution. The acid-modified polyolefin may be obtained by, for example, subjecting polyolefin to graft polymerization with an unsaturated carboxylic acid and/or an anhydride thereof. The acid-modified polyolefin may be obtained by subjecting the olefin-based polymer to graft polymerization with an unsaturated carboxylic acid and/or an anhydride of the unsaturated carboxylic acid. Maleic acid-modified polyolefin obtained by subjecting the olefin-based polymer to graft polymerization with maleic acid, or maleic anhydride-modified polyolefin obtained by subjecting the olefin-based polymer to graft polymerization with maleic anhydride is preferably used. A graft polymerization ratio in the acid-modified polyolefin is preferably from 0.05 wt% to 10 wt%, more preferably from 0.1 wt% to 5 wt%.

For example, a silicone rubber or a silicone resin containing organopolysiloxane as a main component may be used as the silicone-based polymer. In addition, a polymer obtained by cross-linking any such rubber or resin through the addition of a siloxane-based cross-linking agent or a peroxide-based cross-linking agent may be used.

The glass transition temperature of the base polymer is preferably -20°C or less. When the glass transition temperature falls within such range, a pressure-sensitive adhesive layer excellent in pressure-sensitive adhesive strength can be formed.

The pressure-sensitive adhesive layer may contain, as required, any appropriate additive. Examples of the additive include a cross-linking agent, a polymerization initiator, a tackifier, a plasticizer (e.g., a trimellitic acid ester-based plasticizer or a pyromellitic acid ester-based plasticizer), a pigment, a dye, a filler, an age resistor, a conductive material, a UV absorber, a light stabilizer, a release modifier, a softener, a surfactant, a flame retardant, and an antioxidant.

The thickness of the pressure-sensitive adhesive layer is preferably from 1 µm to 30 µm, more preferably from 3 µm to 15 µm. When the thickness falls within such range, an insulating tape excellent in pressure-sensitive adhesive strength and durability can be obtained. In addition, when the insulating inorganic filler is incorporated into the pressure-sensitive adhesive layer to impart an insulating property thereto, an excellent insulating property can be obtained by setting the thickness of the pressure-sensitive adhesive layer within the range.

When the pressure-sensitive adhesive layer contains the insulating inorganic filler, the content of the insulating inorganic filler in the pressure-sensitive adhesive layer is from 10 parts by weight to 200 parts by weight, preferably from 20 parts by weight to 150 parts by weight, more preferably from 50 parts by weight to 120 parts by weight with respect to 100 parts by weight of the base polymer. When the content falls within such range, an insulating tape that is excellent in insulating property and is excellent in adhesiveness with a layer adjacent to the pressure-sensitive adhesive layer (the base material or the insulating layer) can be obtained.

### E. Insulating Layer

The insulating layer contains any appropriate binder resin and the insulating inorganic filler. For example, a polyacrylate-based resin, a polyurethane-based resin, a polyimide-based resin, an aramid-based resin, a polyamide-based resin, an ethylene-vinyl copolymer (EVOH)-based resin, a polyacrylonitrile-based resin, a polyvinyl ether-based resin, a polyvinyl alcohol-based resin, a polyethyleneimine-based resin, a polyamide imide-based resin, a polyether imide-based resin, or a polyvinylidene fluoride-based resin is used as the binder resin. In addition, a rubber-based polymer, such as a butadiene rubber, a styrene-butadiene rubber (SBR), an ethylene-propylene-diene rubber (EPDM), SBS, SIS, SEBS, SEPS, a butyl rubber, or a polyisobutylene rubber, may be used.

The content of the insulating inorganic filler in the insulating layer is from 100 parts by weight to 500 parts by weight with respect to 100 parts by weight of the insulating layer. When the content falls within such range, an insulating tape that is excellent in insulating property, is excellent in adhesiveness with a layer adjacent to the insulating layer (the pressure-sensitive adhesive layer and/or the base material), and has practically excellent flexibility can be obtained.

The thickness of the insulating layer is preferably from 0.1 µm to 10 µm, more preferably from 1 µm to 5 µm. When the thickness falls within such range, an insulating tape excellent in pressure-sensitive adhesive strength, durability, insulating property, and flexibility can be obtained.

### F. Method of producing Insulating Tape

The insulating tape may be produced by any appropriate method. For example, the insulating tape including the base material and the pressure-sensitive adhesive layer may be obtained by applying a composition for forming a pressure-sensitive adhesive layer onto the base material. In addition, the insulating tape further including the insulating layer may be obtained by applying a composition for forming an insulating layer onto the base material, and then applying the composition for forming a pressure-sensitive adhesive layer onto the insulating layer. The composition for forming a pressure-sensitive adhesive layer contains the base polymer and any appropriate additive. In addition, the composition for forming an insulating layer contains the binder resin and any appropriate additive. The insulating inorganic filler is incorporated into any one of the base material, the composition for forming a pressure-sensitive adhesive layer, and the composition for forming an insulating layer.

Any appropriate method may be adopted as a method of applying each of the composition for forming a pressure-sensitive adhesive layer and the composition for forming an insulating layer. A method, such as screen printing, spray coating, gravure coating, flexographic coating, or a die coater, may be adopted.

Now, the present invention is specifically described by way of Examples. However, the present invention is by no means limited by these Examples. Evaluation methods in Examples are as described below.

### (1) Electrolytic Solution Deterioration Test

80 Microliters of a nonaqueous electrolytic solution having the following composition and a sample (measuring 10 mm by 30 mm) produced by bonding an insulating tape to aluminum foil were loaded into an aluminum laminate pack, and then the aluminum laminate pack was sealed in an inert gas atmosphere by heat sealing. Thus, a sample was obtained.

The sample was removed from the inert gas atmosphere, and its initial volume was measured with an electronic specific gravity meter MD-200S manufactured by Alfa Mirage. After that, the sample was stored at 85°C for 72 hours, and the volume of the sample after the heating test treatment was similarly measured, followed by the determination of a volume change amount per 1 mg of a filler from the following calculation equation. The volume change amount corresponds to the amount of a gas produced by the deterioration of the electrolytic solution.

Amount of produced gas [cc/mg]=(volume after test (cc) -volume before test (cc))/weight of insulating inorganic filler in insulating tape (mg)

### <Composition of Nonaqueous Electrolytic Solution>

Electrolyte: 1.4 M LiPF₆
Solvent: a mixed solvent of ethylene carbonate and diethyl carbonate; ethylene carbonate:diethyl carbonate (volume ratio)=1:2

### (2) Adhesive Strength Test

An insulating tape was bonded to a stainless-steel plate (SUS304BA) (bonding condition: one reciprocation of a 2-kilogram roller), and the peeling strength of the insulating tape was measured with a precision universal tester AUTOGRAPH (manufactured by Shimadzu Corporation) under the following conditions.

### <Measurement Conditions>

Peel rate: 300 mm/min
Peel angle: 180°
Peel temperature: ordinary temperature (25°C)

### (3) Pyrolysis Measurement (TG-DTA)

The amount of the pyrolysis residue of a layer containing an insulating filler in an insulating tape was measured under the following measurement conditions. An insulating tape containing a large amount of a pyrolysis residue is an insulating tape whose insulating inorganic filler remains even under high temperature, and is hence excellent in insulating property under high temperature.

### <Measurement Conditions>

Apparatus: Discovery TGA manufactured by TA Instruments Ambient gas: N₂ (25 ml/min)
Container: container made of platinum
Temperature program: RT→1,000°C
Temperature increase rate: 10°C/min

### [Example 1]

A monomer composition containing 100 parts by weight of 2-ethylhexyl acrylate and 5 parts by weight of acrylic acid was polymerized to provide an acrylic polymer (weight-average molecular weight: 1,300,000).

100 Parts by weight of the resultant acrylic polymer, 50 parts by weight of magnesium hydroxide particles (manufactured by Konoshima Chemical Co., Ltd., trade name: "MAGSEEDS S6", average particle diameter: 1.0 µm, BET specific surface area: 4.5 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 7 µm was obtained.

The resultant insulating tape was subjected to the evaluations (1) to (3). The results are shown in Table 1.

### [Example 2]

A composition for forming an insulating layer was prepared by adding 500 parts by weight of alumina particles (manufactured by Nippon Light Metal Co., Ltd., trade name: "LS-110F", average particle diameter: 1.1 µm, BET specific surface area: 3.2 m²/g) serving as an insulating inorganic filler to 100 parts by weight of a polyurethane resin (manufactured by Dainichiseika Color & Chemicals Mfg. Co., Ltd., trade name: "LAMIC SR") serving as a binder resin. The resultant composition for forming an insulating layer was applied onto a base material (polyimide film, manufactured by Du Pont-Toray Co., Ltd., trade name: "KAPTON 100H", thickness: 25 µm) so that its thickness after drying became 3 µm. Thus, a base material with an insulating layer was produced.

A monomer composition containing 100 parts by weight of 2-ethylhexyl acrylate and 5 parts by weight of acrylic acid was polymerized to provide an acrylic polymer (weight-average molecular weight: 1,300,000).

100 Parts by weight of the resultant acrylic polymer and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto the insulating layer of the base material with the insulating layer. Thus, an insulating tape having a pressure-sensitive adhesive layer having a thickness of 7 µm (pressure-sensitive adhesive layer/insulating layer/base material) was obtained.

The resultant insulating tape was subjected to the evaluations (1) to (3). The results are shown in Table 1.

### [Example 3]

A monomer composition containing 75 parts by weight of 2-ethylhexyl acrylate, 20 parts by weight of acryloylmorpholine, 3 parts by weight of acrylic acid, and 0.1 part by weight of 2-hydroxyl acrylate was polymerized to provide an acrylic polymer (weight-average molecular weight: 1,200,000).

100 Parts by weight of the resultant acrylic polymer, 50 parts by weight of magnesium hydroxide particles (manufactured by Sakai Chemical Industry Co., Ltd., trade name: "MGZ-1", average particle diameter: 0.8 µm, BET specific surface area: 6.0 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 10 µm was obtained.

The resultant insulating tape was subjected to the evaluations (1) to (3). The results are shown in Table 1.

### [Example 4]

A monomer composition containing 100 parts by weight of 2-ethylhexyl acrylate and 4 parts by weight of 2-hydroxyethyl acrylate was polymerized to provide an acrylic polymer (weight-average molecular weight: 1,000,000).

100 Parts by weight of the resultant acrylic polymer, 20 parts by weight of magnesium hydroxide particles (manufactured by Sakai Chemical Industry Co., Ltd., trade name: "MGZ-3", average particle diameter: 0.1 µm, BET specific surface area: 20 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 7 µm was obtained.

The resultant insulating tape was subjected to the evaluations (1) to (3). The results are shown in Table 1.

### [Example 5]

A monomer composition containing 100 parts by weight of 2-ethylhexyl acrylate and 5 parts by weight of acrylic acid was polymerized to provide an acrylic polymer (weight-average molecular weight: 1,300,000).

100 Parts by weight of the resultant acrylic polymer, 75 parts by weight of magnesium hydroxide particles (manufactured by Kyowa Chemical Industry Co., Ltd., trade name: "KISUMA 5P", average particle diameter: 0.8 µm, BET specific surface area: 5.7 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 7 µm was obtained.

The resultant insulating tape was subjected to the evaluations (1) to (3). The results are shown in Table 1.

### [Example 6]

A monomer composition containing 100 parts by weight of 2-ethylhexyl acrylate and 4 parts by weight of 2-hydroxyethyl acrylate was polymerized to provide an acrylic polymer (weight-average molecular weight: 1,000,000).

100 Parts by weight of the resultant acrylic polymer, 30 parts by weight of magnesium oxide particles (manufactured by Kyowa Chemical Industry Co., Ltd., trade name: "MAGSARAT 30", average particle diameter: 3.1 µm, BET specific surface area: 40 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 12 µm was obtained.

The resultant insulating tape was subjected to the evaluations (1) to (3). The results are shown in Table 1.

### [Example 7]

A monomer composition containing 100 parts by weight of 2-ethylhexyl acrylate and 4 parts by weight of 2-hydroxyethyl acrylate was polymerized to provide an acrylic polymer (weight-average molecular weight: 1,000,000).

100 Parts by weight of the resultant acrylic polymer, 30 parts by weight of magnesium oxide particles (manufactured by Kyowa Chemical Industry Co., Ltd., trade name: "MAGSARAT 150", average particle diameter: 4.4 µm, BET specific surface area: 155 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 20 µm was obtained.

The resultant insulating tape was subjected to the evaluations (1) to (3). The results are shown in Table 1.

### [Example 8]

A monomer composition containing 100 parts by weight of 2-ethylhexyl acrylate and 5 parts by weight of acrylic acid was polymerized to provide an acrylic polymer (weight-average molecular weight: 1,300,000).

100 Parts by weight of the resultant acrylic polymer, 50 parts by weight of magnesium oxide particles (manufactured by Kyowa Chemical Industry Co., Ltd., trade name: "PYROKISUMA 5301K", average particle diameter: 2.8 µm, BET specific surface area: 1.4 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 15 µm was obtained.

The resultant insulating tape was subjected to the evaluations (1) to (3). The results are shown in Table 1.

### [Example 9 not in accordance with the present invention]

70 Parts by weight of polyisobutylene (manufactured by BASF Japan Ltd., trade name: "OPPANOL B80", weight-average molecular weight: 750,000), 30 parts by weight of polyisobutylene (manufactured by BASF Japan Ltd., trade name: "OPPANOL B50", weight-average molecular weight: 340,000), 25 parts by weight of a hydrogenated petroleum resin (manufactured by Arakawa Chemical Industries, Ltd., trade name: "ARKON P-125"), and 30 parts by weight of aluminum hydroxide particles (manufactured by Showa Denko K.K., trade name: "HIGILITE H42", average particle diameter: 1.0 µm, BET specific surface area: 5.0 m²/g) serving as an insulating inorganic filler were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 8 µm was obtained.

The resultant insulating tape was subjected to the evaluations (1) to (3). The results are shown in Table 1.

### [Example 10 not in accordance with the present invention]

An insulating tape was obtained in the same manner as in Example 2 except that 100 parts by weight of silica particles (manufactured by Tosoh Silica Corporation, trade name: "NIPSIL E220A", average particle diameter: 1.0 µm, BET specific surface area: 147 m²/g) were used instead of 500 parts by weight of the alumina particles (manufactured by Nippon Light Metal Co., Ltd., trade name: "LS-110F", average particle diameter: 1.1 µm, BET specific surface area: 3.2 m²/g).

The resultant insulating tape was subjected to the evaluations (1) to (3). The results are shown in Table 1.

### [Example 11 not in accordance with the present invention]

An insulating tape was obtained in the same manner as in Example 2 except that aluminum hydroxide particles (manufactured by Nippon Light Metal Co., Ltd., trade name: "BF013", average particle diameter: 1.0 µm, BET specific surface area: 4.0 m²/g) were used instead of 500 parts by weight of the alumina particles (manufactured by Nippon Light Metal Co., Ltd., trade name: "LS-110F", average particle diameter: 1.1 µm, BET specific surface area: 3.2 m²/g).

The resultant insulating tape was subjected to the evaluations (1) to (3). The results are shown in Table 1.

### [Example 12]

A monomer composition containing 100 parts by weight of 2-ethylhexyl acrylate and 5 parts by weight of acrylic acid was polymerized to provide an acrylic polymer (weight-average molecular weight: 1,300,000).

100 Parts by weight of the resultant acrylic polymer, 100 parts by weight of magnesium oxide particles (manufactured by Konoshima Chemical Co., Ltd., trade name: "PSF-WR", average particle diameter: 2.0 µm, BET specific surface area: 6.6 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polypropylene film, manufactured by Toray Industries, Inc., trade name: "TORAYFAN", thickness: 12 µm). Thus, an insulating tape having a pressure-sensitive adhesive layer having a thickness of 5 µm was obtained.

The resultant insulating tape was subjected to the evaluations (1) to (3). The results are shown in Table 1.

### [Example 13]

A composition for forming an insulating layer was prepared by adding 20 parts by weight of a polyisocyanate-based compound (manufactured by Dainichiseika Color & Chemicals Mfg. Co., Ltd., trade name: "LAMIC B HARDENER") and 500 parts by weight of magnesium oxide particles (manufactured by Konoshima Chemical Co., Ltd., trade name: "PSF-WR", average particle diameter: 2.0 µm, BET specific surface area: 6.6 m²/g) serving as an insulating inorganic filler to 100 parts by weight of a polyurethane resin (manufactured by Dainichiseika Color & Chemicals Mfg. Co., Ltd., trade name: "NB300") serving as a binder resin. The resultant composition for forming an insulating layer was applied onto a base material (polyimide film, manufactured by Du Pont-Toray Co., Ltd., trade name: "KAPTON 100H", thickness: 25 µm) so that its thickness after drying became 5 µm. Thus, a base material with an insulating layer was produced.

A monomer composition containing 100 parts by weight of 2-ethylhexyl acrylate and 5 parts by weight of acrylic acid was polymerized to provide an acrylic polymer (weight-average molecular weight: 1,300,000).

100 Parts by weight of the resultant acrylic polymer and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto the insulating layer of the base material with the insulating layer. Thus, an insulating tape having a pressure-sensitive adhesive layer having a thickness of 7 µm (pressure-sensitive adhesive layer/insulating layer/base material) was obtained.

The resultant insulating tape was subjected to the evaluations (1) to (3). The results are shown in Table 1.

### [Example 14]

A monomer composition containing 100 parts by weight of 2-ethylhexyl acrylate and 10 parts by weight of acrylic acid was polymerized to provide an acrylic polymer (weight-average molecular weight: 1,200,000).

100 Parts by weight of the resultant acrylic polymer, 75 parts by weight of magnesium oxide particles (manufactured by Konoshima Chemical Co., Ltd., trade name: "PSF-WR", average particle diameter: 2.0 µm, BET specific surface area: 6.6 m²/g) serving as an insulating inorganic filler, and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 7 µm was obtained.

The resultant insulating tape was subjected to the evaluations (1) to (3). The results are shown in Table 1.

### [Example 15 not in accordance with the present invention]

100 Parts by weight of polyisobutylene (manufactured by BASF Japan Ltd., trade name: "OPPANOL B80", weight-average molecular weight: 750,000), 30 parts by weight of polyisobutylene (manufactured by BASF Japan Ltd., trade name: "OPPANOL B12", weight-average molecular weight: 51,000), and 50 parts by weight of magnesium oxide particles (manufactured by Kyowa Chemical Industry Co., Ltd., trade name: "PYROKISUMA 5301K", average particle diameter: 2.8 µm, BET specific surface area: 1.4 m²/g) serving as an insulating inorganic filler were mixed to prepare a composition for forming a pressure-sensitive adhesive layer.

The composition for forming a pressure-sensitive adhesive layer was applied onto a base material (polyimide film, manufactured by Du Pont-Toray Co., Ltd., trade name: "KAPTON 100H", thickness: 25 µm). Thus, an insulating tape having a pressure-sensitive adhesive layer having a thickness of 15 µm was obtained.

The resultant insulating tape was subjected to the evaluations (1) to (3). The results are shown in Table 1.

### [Example 16]

An insulating tape was obtained in the same manner as in Example 13 except that 300 parts by weight of boron nitride particles (manufactured by Showa Denko K.K., trade name: "UHP-S2", average particle diameter: 0.5 µm, BET specific surface area: 10 m²/g) were used instead of 500 parts by weight of the magnesium oxide particles (manufactured by Konoshima Chemical Co., Ltd., trade name: "PSF-WR", average particle diameter: 2.0 µm, BET specific surface area: 6.6 m²/g).

The resultant insulating tape was subjected to the evaluations (1) to (3). The results are shown in Table 1.

### [Example 17]

A composition for forming an insulating layer was prepared by adding 300 parts by weight of titanium oxide particles (manufactured by Sakai Chemical Industry Co., Ltd., trade name: "TITONE R-42", average particle diameter: 0.29 µm, BET specific surface area: 5.1 m²/g) serving as an insulating inorganic filler to 100 parts by weight of a meta-aramid resin (manufactured by Teijin Limited, trade name: "Conex") serving as a binder resin. The resultant composition for forming an insulating layer was applied onto a base material (polyimide film, manufactured by Du Pont-Toray Co., Ltd., trade name: "KAPTON 100H", thickness: 25 µm) so that its thickness after drying became 5 µm. Thus, a base material with an insulating layer was produced.

A monomer composition containing 100 parts by weight of 2-ethylhexyl acrylate and 5 parts by weight of acrylic acid was polymerized to provide an acrylic polymer (weight-average molecular weight: 1,300,000).

100 Parts by weight of the resultant acrylic polymer and 2 parts by weight of polyisocyanate (manufactured by Nippon Polyurethane Industry Co., Ltd., trade name: "CORONATE L") were mixed to prepare a composition for forming a pressure-sensitive adhesive layer.

The composition for forming a pressure-sensitive adhesive layer was applied onto the insulating layer of the base material with the insulating layer. Thus, an insulating tape having a pressure-sensitive adhesive layer having a thickness of 7 µm (pressure-sensitive adhesive layer/insulating layer/base material) was obtained.

The resultant insulating tape was subjected to the evaluations (1) to (3). The results are shown in Table 1.

### [Example 18]

An insulating tape was obtained in the same manner as in Example 2 except that 300 parts by weight of magnesium carbonate particles (manufactured by Konoshima Chemical Co., Ltd., trade name: "MSS", average particle diameter: 1.2 µm, BET specific surface area: 5.5 m²/g) were used instead of 500 parts by weight of the alumina particles (manufactured by Nippon Light Metal Co., Ltd., trade name: "LS-110F", average particle diameter: 1.1 µm, BET specific surface area: 3.2 m²/g).

The resultant insulating tape was subjected to the evaluations (1) to (3). The results are shown in Table 1.

### [Comparative Example 1]

An insulating tape was obtained in the same manner as in Example 1 except that a composition for forming a pressure-sensitive adhesive layer was prepared without the use of the insulating inorganic filler. The resultant insulating tape was subjected to the evaluations (1) to (3). The results are shown in Table 1.

**Table 1**

| | Insulating inorganic filler | | | | Pressure-sensitive adhesive layer | | Insulating layer | | Base material | Pressure-sensitive adhesive strength [N/10 mm] | Gas production amount [cc/mg] | Pyrolysis residue [%] |
|---|---|---|---|---|---|---|---|---|---|---|---|---|
| | Material | Average particle diameter [µm] | BET specific surface area [m²/g] | Insulating inorganic filler-containing layer | Material | Thickn ess [µm] | Material | Thickn ess [µm] | Material | | | |
| Example 1 | Magnesium hydroxide | 1.0 | 4.5 | Pressure-sensitive adhesive layer | 2EHA/AA=100/5 | 7 | - | - | Polyimide #25 | 0.91 | 0.070 | 28.3 |
| Example 2 | Alumina | 1.1 | 3.2 | Insulating layer | 2EHA/AA=100/5 | 7 | LAMIC SR | 3 | Polyimide #25 | 2.01 | 0.200 | 91.7 |
| Example 3 | Magnesium hydroxide | 0.8 | 6.0 | Pressure-sensitive adhesive layer | 2EHA/ACMO/AA/H EA=75/20/3/0.1 | 10 | - | - | Polyimide #25 | 1.42 | 0.170 | 25.4 |
| Example 4 | Magnesium hydroxide | 0.1 | 20 | Pressure-sensitive adhesive layer | 2EHA/HEA=100/4 | 7 | - | - | Polyimide #25 | 0.32 | 0.244 | 23.3 |
| Example 5 | Magnesium hydroxide | 0.8 | 5.7 | Pressure-sensitive adhesive layer | 2EHA/AA=100/5 | 7 | - | - | Polyimide #25 | 0.65 | 0.148 | 42.9 |
| Example 6 | Magnesium oxide | 3.1 | 40 | Pressure-sensitive adhesive layer | 2EHA/HEA=100/4 | 12 | - | - | Polyimide #25 | 0.44 | 0.076 | 18.6 |
| Example 7 | Magnesium oxide | 4.4 | 155 | Pressure-sensitive adhesive layer | 2EHA/HEA=100/4 | 20 | - | - | Polyimide #25 | 0.70 | 0.053 | 17.9 |
| Example 8 | Magnesium oxide | 2.8 | 1.4 | Pressure-sensitive adhesive layer | 2EHA/AA=100/5 | 15 | - | - | Polyimide #25 | 0.61 | 0.023 | 34.7 |
| Example 9 | Aluminum hydroxide | 1.0 | 5.0 | Pressure-sensitive adhesive layer | B80/B50/P125=7 0/30/25 | 8 | - | - | Polyimide #25 | 0.91 | 0.748 | 12.8 |
| Example 10 | Silica | 1.0 | 147.0 | Insulating layer | 2EHA/AA=100/5 | 3 | LAMIC SR | 3 | Polyimide #25 | 1.38 | 1.868 | 52.1 |
| Example 11 | Aluminum hydroxide | 1.7 | 4.0 | Insulating layer | 2EHA/AA=100/5 | 7 | LAMIC SR | 3 | Polyimide #25 | 1. 97 | 4.591 | 61.1 |
| Example 12 | Magnesium oxide | 2.0 | 6.6 | Pressure-sensitive adhesive layer | 2EHA/AA=100/5 | 7 | - | - | Polypropy lene #12 | 1.17 | 0.065 | 52.4 |
| Example 13 | Magnesium oxide | 2.0 | 6.6 | Insulating layer | 2EHA/AA=100/5 | 7 | NB300 | 3 | Polyimide #25 | 1. 98 | 0.050 | 90.7 |
| Example 14 | Magnesium oxide | 2.0 | 6.6 | Pressure-sensitive adhesive layer | 2EHA/AA=100/10 | 7 | - | - | Polyimide #25 | 1.17 | 0.063 | 46.8 |
| Example 15 | Magnesium oxide | 2.8 | 1.4 | Pressure-sensitive adhesive layer | B80/B12=100/30 | 15 | - | - | Polyimide #25 | 0.44 | 0.020 | 86.8 |
| Example 16 | boron nitride | 0.5 | 10 | Insulating layer | 2EHA/AA=100/5 | 7 | NB300 | 5 | Polyimide #25 | 0.82 | 0.050 | 31.0 |
| Example 17 | titanium oxide | 0.29 | 5.1 | Insulating layer | 2EHA/AA=100/5 | 7 | Conex | 5 | Polyimide #25 | 0.85 | 0.151 | 90.6 |
| Example 18 | magnesium carbonate | 1.2 | 5.5 | Insulating layer | 2EHA/AA=100/5 | 7 | LAMIC SR | 3 | Polyimide #25 | 0. 92 | 0.184 | 76.2 |

| | | | | | | | | | | | | |
|---|---|---|---|---|---|---|---|---|---|---|---|---|
| Comparative Example 1 | - | - | - | | 2EHA/AA=100/5 | 7 | - | - | Polyimide #25 | 1.75 | 0.05 | 0.0 |

## Claims

1. An insulating tape for a nonaqueous battery, comprising:
a base material; and
a pressure-sensitive adhesive layer arranged on at least one side of the base material, wherein the pressure-sensitive adhesive layer contains a base polymer,
wherein the pressure-sensitive adhesive layer contains an insulating inorganic filler,
the content of the insulating inorganic filler in the pressure-sensitive adhesive layer is from 10 parts by weight to 200 parts by weight with respect to 100 parts by weight of the base polymer,
wherein the insulating inorganic filler comprises at least one kind selected from the group consisting of magnesium hydroxide, magnesium carbonate, magnesium oxide, alumina, boron nitride, and titanium oxide, and
wherein the pressure-sensitive adhesive layer contains an acrylic polymer having, on a side chain thereof, an alkyl group having 4 or more carbon atoms.

2. An insulating tape for a nonaqueous battery, comprising:
a base material with an insulating layer; and
a pressure-sensitive adhesive layer arranged on at least one side of the base material with the insulating layer,
wherein the insulating layer contains an insulating inorganic filler,
wherein the content of the insulating inorganic filler in the insulating layer is from 100 parts by weight to 500 parts by weight with respect to 100 parts by weight of the insulating layer,
wherein the insulating inorganic filler comprises at least one kind selected from the group consisting of magnesium hydroxide, magnesium carbonate, magnesium oxide, alumina, boron nitride, and titanium oxide, and
wherein the pressure-sensitive adhesive layer contains an acrylic polymer having, on a side chain thereof, an alkyl group having 4 or more carbon atoms.

3. The insulating tape for a nonaqueous battery according to claim 1 or 2, wherein the insulating inorganic filler has a layer having a surface treated with one of a higher fatty acid, an anionic surfactant, a phosphoric acid ester, a silane coupling agent, a titanate coupling agent, and a fatty acid ester of a polyhydric alcohol.

4. The insulating tape for a nonaqueous battery according to any one of claims 1 to 3, wherein the pressure-sensitive adhesive layer contains one of a butyl rubber, a polyisobutylene rubber, a styrene-ethylene-butylene-styrene block rubber (SEBS), a styrene-butadiene-styrene block rubber (SBS), and a styrene-isoprene-styrene block rubber (SIS).

5. The insulating tape for a nonaqueous battery according to any one of claims 1 to 4, wherein the pressure-sensitive adhesive layer contains an olefin-based polymer.

6. The insulating tape for a nonaqueous battery according to any one of claims 2 to 5, wherein the insulating layer contains one of a polyacrylate-based resin, a polyurethane-based resin, a polyimide-based resin, an aramid-based resin, a polyamide-based resin, an EVOH-based resin, a polyacrylonitrile-based resin, a polyvinyl ether-based resin, a polyvinyl alcohol-based resin, a polyethyleneimine-based resin, a polyamide imide-based resin, a polyether imide-based resin, and a polyvinylidene fluoride-based resin.

7. The insulating tape for a nonaqueous battery according to any one of claims 2 to 6, wherein the insulating layer contains one of a butadiene rubber, a styrene-butadiene rubber (SBR), an ethylene-propylene-diene rubber (EPDM), a styrene-butadiene-styrene block rubber (SBS), a styrene-isoprene-styrene block rubber (SIS), a styrene-ethylene-butylene-styrene block rubber (SEBS), a styrene-ethylene-propylene-styrene block rubber (SEPS), a butyl rubber, and a polyisobutylene rubber.

8. The insulating tape for a nonaqueous battery according to any one of claims 1 to 7, wherein when the insulating tape for a nonaqueous battery is immersed in the following nonaqueous electrolytic solution A containing a predetermined electrolyte and a predetermined solvent, and is left to stand for 72 hours, an amount of a gas produced from the nonaqueous electrolytic solution A is 0.3 cc/mg or less per 1 mg of the insulating inorganic filler:
<nonaqueous electrolytic solution A>
electrolyte: 1.4 M LiPF₆
solvent: a mixed solvent of ethylene carbonate and diethyl carbonate; ethylene carbonate:diethyl carbonate (volume ratio)=1:2
liquid temperature: 85°C.

9. A nonaqueous battery, comprising the insulating tape of any one of claims 1 to 8.

## Patentansprüche

1. Isolierband für eine nicht-wässrige Batterie, umfassend:
ein Basismaterial; und
eine druckempfindliche Haftschicht, die auf mindestens einer Seite des Basismaterials angeordnet ist, wobei die druckempfindliche Haftschicht ein Basispolymer enthält,
wobei die druckempfindliche Haftschicht einen isolierenden anorganischen Füllstoff enthält,
wobei der Gehalt des isolierenden anorganischen Füllstoffs in der Haftschicht von 10 Gewichtsteilen bis 200 Gewichtsteilen, bezogen auf 100 Gewichtsteile des Basispolymers, beträgt,
wobei der isolierende anorganische Füllstoff mindestens eine Art umfasst, die ausgewählt ist aus der Gruppe, bestehend aus Magnesiumhydroxid, Magnesiumcarbonat, Magnesiumoxid, Aluminiumoxid, Bornitrid und Titanoxid, und
wobei die druckempfindliche Haftschicht ein Acrylpolymer enthält, das in einer Seitenkette eine Alkylgruppe mit 4 oder mehr Kohlenstoffatomen aufweist.

2. Isolierband für eine nicht-wässrige Batterie, umfassend:
ein Basismaterial mit einer Isolierschicht; und
eine druckempfindliche Haftschicht, die auf mindestens einer Seite des Basismaterials mit der Isolierschicht angeordnet ist,
wobei die Isolierschicht einen isolierenden anorganischen Füllstoff enthält,
wobei der Gehalt des isolierenden anorganischen Füllstoffs in der Isolierschicht von 100 Gewichtsteilen bis 500 Gewichtsteilen, bezogen auf 100 Gewichtsteile der Isolierschicht, beträgt,
wobei der isolierende anorganische Füllstoff mindestens eine Art umfasst, die ausgewählt ist aus der Gruppe, bestehend aus Magnesiumhydroxid, Magnesiumcarbonat, Magnesiumoxid, Aluminiumoxid, Bornitrid und Titanoxid, und
wobei die druckempfindliche Haftschicht ein Acrylpolymer enthält, das in einer Seitenkette eine Alkylgruppe mit 4 oder mehr Kohlenstoffatomen aufweist.

3. Isolierband für eine nicht-wässrige Batterie nach Anspruch 1 oder 2, wobei der isolierende anorganische Füllstoff eine Schicht mit einer Oberfläche aufweist, die mit einer höheren Fettsäure, einem anionischen grenzflächenaktiven Mittel, einem Phosphorsäureester, einem Silan-Kupplungsmittel, einem Titanat-Kupplungsmittel oder einem Fettsäureester eines mehrwertigen Alkohols behandelt ist.

4. Isolierband für eine nicht-wässrige Batterie nach einem der Ansprüche 1 bis 3, wobei die druckempfindliche Haftschicht einen Butylkautschuk, einen Polyisobutylenkautschuk, einen Styrol-Ethylen-Butylen-Styrol-Blockkautschuk (SEBS), einen Styrol-Butadien-Styrol-Blockkautschuk (SBS) oder einen Styrol-Isopren-Styrol-Blockkautschuk (SIS) enthält.

5. Isolierband für eine nicht-wässrige Batterie nach einem der Ansprüche 1 bis 4, wobei die druckempfindliche Haftschicht ein Polymer auf Olefin-Basis enthält.

6. Isolierband für eine nicht-wässrige Batterie nach einem der Ansprüche 2 bis 5, wobei die Isolierschicht eines von einem Harz auf Polyacrylat-Basis, einem Harz auf Polyurethan-Basis, einem Harz auf Polyimid-Basis, einem Harz auf Aramid-Basis, einem Harz auf Polyamid-Basis, einem Harz auf EVOH-Basis, einem Harz auf Polyacrylnitril-Basis, einem Harz auf Polyvinylether-Basis, einem Harz auf Polyvinylalkohol-Basis, einem Harz auf Polyethylenimin-Basis, einem Harz auf Polyamidimid-Basis, einem Harz auf Polyetherimid-Basis und einem Harz auf Polyvinylidenfluorid-Basis enthält.

7. Isolierband für eine nicht-wässrige Batterie nach einem der Ansprüche 2 bis 6, wobei die Isolierschicht einen von einem Butadienkautschuk, einem Styrol-Butadien-Kautschuk (SBR), einem Styrol-Butadien-Kautschuk (SBR), einem Ethylen-Propylen-Dien-Kautschuk (EPDM), einem Styrol-Butadien-Styrol-Blockkautschuk (SBS), einem Styrol-Isopren-Styrol-Blockkautschuk (SIS), einem Styrol-Ethylen-Butylen-Styrol-Blockkautschuk (SEBS), einem Styrol-Ethylen-Propylen-Styrol-Blockkautschuk (SEPS), einem Butylkautschuk und einem Polyisobutylenkautschuk enthält.

8. Isolierband für eine nicht-wässrige Batterie nach einem der Ansprüche 1 bis 7, wobei, wenn das Isolierband für eine nicht-wässrige Batterie in die folgende nicht-wässrige elektrolytische Lösung A, die einen vorbestimmten Elektrolyten und ein vorbestimmtes Lösungsmittel enthält, eingetaucht und 72 Stunden lang stehen gelassen wird, eine Menge eines Gases, das aus der nicht-wässrigen elektrolytischen Lösung A erzeugt wird, 0,3 cc/mg oder weniger pro 1 mg des isolierenden anorganischen Füllstoffs beträgt:
<nicht-wässrige elektrolytische Lösung A>
| | |
|---|---|
| Elektrolyt: | 1,4 M LiPF₆ |
| Lösungsmittel: | ein gemischtes Lösungsmittel aus Ethylencarbonat und Diethylcarbonat; Ethylencarbonat: Diethylcarbonat (Volumenverhältnis)=1:2 |
| Temperatur der Flüssigkeit: | 85°C. |

9. Nicht-wässrige Batterie, umfassend das Isolierband nach einem der Ansprüche 1 bis 8.

## Revendications

1. Ruban isolant pour une batterie non aqueuse, comprenant :
un matériau de base ; et
une couche d'adhésif sensible à la pression agencée sur au moins un côté du matériau de base, dans lequel la couche d'adhésif sensible à la pression contient un polymère de base,
dans lequel la couche d'adhésif sensible à la pression contient une charge inorganique isolante,
la teneur en la charge inorganique isolante dans la couche d'adhésif sensible à la pression va de 10 parties en poids à 200 parties en poids par rapport à 100 parties en poids du polymère de base,
dans lequel la charge inorganique isolante comprend au moins un type sélectionné parmi le groupe constitué de l'hydroxyde de magnésium, du carbonate de magnésium, de l'oxyde de magnésium, de l'alumine, du nitrure de bore et de l'oxyde de titane, et
dans lequel la couche d'adhésif sensible à la pression contient un polymère acrylique ayant, sur une chaîne latérale de celui-ci, un groupe alkyle ayant 4 atomes de carbone ou plus.

2. Ruban isolant pour une batterie non aqueuse, comprenant :
un matériau de base avec une couche isolante ; et
une couche d'adhésif sensible à la pression agencée sur au moins un côté du matériau de base avec la couche isolante,
dans lequel la couche isolante contient une charge inorganique isolante,
dans lequel la teneur en la charge inorganique isolante dans la couche isolante va de 100 parties en poids à 500 parties en poids par rapport à 100 parties en poids de la couche isolante,
dans lequel la charge inorganique isolante comprend au moins un type sélectionné parmi le groupe constitué de l'hydroxyde de magnésium, du carbonate de magnésium, de l'oxyde de magnésium, de l'alumine, du nitrure de bore et de l'oxyde de titane, et
dans lequel la couche d'adhésif sensible à la pression contient un polymère acrylique ayant, sur une chaîne latérale de celui-ci, un groupe alkyle ayant 4 atomes de carbone ou plus.

3. Ruban isolant pour une batterie non aqueuse selon la revendication 1 ou 2, dans lequel la charge inorganique isolante a une couche ayant une surface traitée avec un d'un acide gras supérieur, d'un tensioactif anionique, d'un ester d'acide phosphorique, d'un agent adhésif au silane, d'un agent adhésif au titanate et d'un ester d'acide gras d'un alcool polyhydrique.

4. Ruban isolant pour une batterie non aqueuse selon l'une quelconque des revendications 1 à 3, dans lequel la couche d'adhésif sensible à la pression contient un d'un caoutchouc butylique, d'un caoutchouc de polyisobutylène, d'un caoutchouc à blocs de styrène-éthylène-butylène-styrène (SEBS), d'un caoutchouc à blocs de styrène-butadiène-styrène (SBS) et d'un caoutchouc à blocs de styrène-isoprène-styrène (SIS).

5. Ruban isolant pour une batterie non aqueuse selon l'une quelconque des revendications 1 à 4, dans lequel la couche d'adhésif sensible à la pression contient un polymère à base d'oléfine.

6. Ruban isolant pour une batterie non aqueuse selon l'une quelconque des revendications 2 à 5, dans lequel la couche isolante contient une d'une résine à base de polyacrylate, d'une résine à base de polyuréthane, d'une résine à base de polyimide, d'une résine à base d'aramide, d'une résine à base de polyamide, d'une résine à base de EVOH, d'une résine à base de polyacrylonitrile, d'une résine à base d'éther polyvinylique, d'une résine à base d'alcool polyvinylique, d'une résine à base de polyéthylèneimine, d'une résine à base de polyamide imide, d'une résine à base de polyéther imide et d'une résine à base de fluorure de polyvinylidène.

7. Ruban isolant pour une batterie non aqueuse selon l'une quelconque des revendications 2 à 6, dans lequel la couche isolante contient un d'un caoutchouc de butadiène, d'un caoutchouc de styrène-butadiène (SBR), d'un caoutchouc d'éthylène-propylène-diène (EPDM), d'un caoutchouc à blocs de styrène-butadiène-styrène (SBS), d'un caoutchouc à blocs de styrène-isoprène-styrène (SIS), d'un caoutchouc à blocs de styrène-éthylène-butylène-styrène (SEBS), d'un caoutchouc à blocs de styrène-éthylène-propylène-styrène (SEPS), d'un caoutchouc butylique et d'un caoutchouc de polyisobutylène.

8. Ruban isolant pour une batterie non aqueuse selon l'une quelconque des revendications 1 à 7, dans lequel lorsque le ruban isolant pour une batterie non aqueuse est immergé dans la solution électrolytique non aqueuse suivante A contenant un électrolyte prédéterminé et un solvant prédéterminé, et est laissé au repos pendant 72 heures, une quantité d'un gaz produit à partir de la solution électrolytique non aqueuse A est de 0,3 cc/mg ou moins pour 1 mg de la charge inorganique isolante :
<solution électrolytique non aqueuse A>
| | |
|---|---|
| électrolyte : | 1,4 M de LiPF₆ |
| solvant : | un solvant mélangé de carbonate d'éthylène et de carbonate diéthylique ; carbonate d'éthylène/carbonate diéthylique (rapport volumique)=1/2 |
| température du liquide : | 85 °C. |

9. Batterie non aqueuse, comprenant le ruban isolant selon l'une quelconque des revendications 1 à 8.
